# EUROPEAN PATENT APPLICATION

(11) **EP 3 838 848 A1**
(43) Date of publication of application: **23.06.2021**
(21) Application number: 19216770.8
(22) Date of filing: 17.12.2019
(51) Int. Cl.: C02F 1/42, B01J 47/00

(54) **DEVICE COMPRISING FILTER WITH-END-OF LIFE MECHANISM**

(71) Applicant: Koninklijke Philips N.V., 5656 AG Eindhoven (NL)
(72) Inventor: ZUIDERVAART, Jasper, 5656 AE Eindhoven (NL); BRUGGINK, Wilhelmus Hendrikus Maria, 5656 AE Eindhoven (NL); LOOPSTRA, Kasper, 5656 AE Eindhoven (NL); SINNEMA, Anke, 5656 AE Eindhoven (NL); TJEERDSMA, Peter, 5656 AE Eindhoven (NL)
(74) Representative: Philips Intellectual Property & Standards

(57) **Abstract**

The invention provides a device comprising (i) a filter having an autonomous mechanical end-of-life mechanism, (ii) a current path for an electrical or liquid current, wherein: the filter comprises an ion-exchange resin, wherein the ion-exchange resin undergoes a dimensional change when ion-exchanging; and the ion-exchange resin is arranged such that over a threshold value of the dimensional change the dimensional change of the ion-exchange resin mechanically adjusts the current through the current path.

## Description

### FIELD OF THE INVENTION

The invention relates to a device comprising a filter with an end-of-life mechanism. The invention further relates to an apparatus comprising or functionally couplable to such a device. The invention further relates to a method for hampering usage of a filter upon approaching depletion. The invention further relates to a kit of parts.

### BACKGROUND OF THE INVENTION

Filters with end-of-life mechanisms are known in the art. For example, US5882507A describes a filter cartridge end-of-life mechanism and a filter cartridge assembly for a water treatment device. The end-of-life mechanism comprises a float, which is moved along an escape path each time the device is filled. A counting mechanism connected to the float provides a continuous visual indication of the amount of useful life remaining in the filter cartridge. The cartridge assembly includes a tray detachably connected to a filter cartridge. The tray is positioned beneath the outlet end of the cartridge to remove water treatment particles from the treated water.

### SUMMARY OF THE INVENTION

Decalcification filters may typically be used to prevent premature failure of an apparatus, such as a coffee machine, due to calcification. Many of such decalcification filters may be based on an ion-exchange resin, wherein hardness ions are removed from the water, e.g. by exchanging H⁺ ions of the filter by Ca²⁺ ions from the water. Once all resin has been exchanged, the filter should be replaced in order to prevent calcification.

In known devices, replacement of the filter may be triggered based on a count of units of water that has passed through. For example, in a coffee machine, the replacement of the filter may be triggered based on the number of cups of coffee that have been brewed. This is not very accurate, as it does not take into account the water hardness, which may differ per region. Neither does it take into account the actual amount of water that has passed through the filter, which may differ per use. For instance, in the case of a coffee machine the actual amount of water that has passed through the filter may differ per recipe, e.g. lungo, espresso, ristretto, Americano, etc. Therefore, in practice, the replacement trigger may come too soon or too late.

In other known devices, a sensor system may be provided, configured to analyze a depletion of the filter. The sensor system may provide a sensor signal to the device, marking the filter for regeneration or replacement. Such a device may be relatively complex and expensive.

In aforementioned devices, the filter may not be replaced at all if a user chooses to ignore the replacement alert. This may ultimately harm the device through calcification.

The present invention aims to overcome or ameliorate at least one of the disadvantages of the prior art, or to provide a useful alternative.

Hence, according to an aspect of the invention, a device may be provided comprising a filter, a current path for an electrical or liquid current, and an end-of-life mechanism for hampering usage of the filter when the filter approaches its depletion. The filter comprises an ion-exchange resin (also "resin"), wherein the ion-exchange resin undergoes a dimensional change when ion-exchanging. The ion-exchange resin (210) is arranged such that the dimensional change (d) of the ion-exchange resin (210) mechanically adjusts the current (115) through the current path (110).

The present invention provides the benefit that the current adjustment is mechanically coupled to the depletion of the filter, especially depletion of the ion-exchange resin, via the dimensional change the ion-exchange resin undergoes during ion-exchanging. The present invention is based on the insight that the volume of the ion-exchange resin changes, i.e. increases or decreases, as more ions are exchanged, especially as more hardness ions are captured over time. When the dimensional change reaches a certain threshold, a predetermined fraction of the ion-exchange resin may typically have been depleted and the filter thus needs to be replaced. The dimensional change can for instance be used to interact with an electrical current path, e.g. to interrupt a conductive path or push electrodes towards each other, thus changing the electronic properties (e.g. impedance) of said circuit or component. Alternatively, the dimensional change can be used to deform or block a liquid current path, so that for instance a water supply into and/or out of the filter is blocked, thus hampering further use of the filter. Optionally, the reduced and ultimately blocked liquid current can be measured with a flow sensor and used to inform a user via a suitable user interface.

The term "end-of-life mechanism" herein refers to a mechanism preventing the use of the filter, after the filter is used up, such as the filter being depleted, especially the ion-exchange resin in the filter being depleted.

The end-of-life mechanism is a mechanical end-of-life mechanism, meaning that the end-of-life mechanism uses the dimensional change of the ion-exchange resin in a physical way to adjust the current through the current path; either directly (by using the dimensional change itself to obstruct or block the current path), or indirectly (by using volume changes/forces/pressures generated by the dimensional change to move and/or deform an intermediate adjustment element, to obstruct, block or sever the current path).

The end-of-life mechanism is an autonomous end-of-life mechanism, i.e. the end-of-life mechanism does not rely on any user or external systems such as a sensor system and/or a control system. Instead, depletion and accompanying dimensional change of the filter itself triggers the end-of-life mechanism and causes further usage of the filter to be hampered.

The term "current path" may herein especially refer to the space or element through which the current flows. For example, for a liquid current the current path may be formed by a tube through which the liquid current may flow. For an electrical current the current path may for instance be formed by a conductive wire.

The ion-exchange resin may be configured to exchange a first ion type, which may especially be initially present in the resin, with a second ion type, especially when a liquid, especially water, comprising the second ion type is brought in contact with the ion-exchange resin. For example, in embodiments, the first ion type may be H⁺ and the second ion type may be Ca²⁺. In such embodiments, the filter may be used for decalcification of a liquid. In further embodiments, the ion-exchange resin may be configured for the exchange of other first ion types and/or second ion type. For example, the second ion type may comprise an ion selected from the group comprising Ca²⁺ and Mg²⁺, especially at least Ca²⁺.

The exchange of ions in the ion-exchange resin may result in a dimensional change of the ion-exchange resin, *i.e.,* the ion-exchange resin may undergo a dimensional exchange when ion-exchanging, especially when exchanging the first ion type with the second ion type.

The term "dimensional change" may herein refer to the ion-exchange resin changing in size. In embodiments, the dimensional change may be a dimensional increase (or: "expansion"). In further embodiments, the dimensional change may especially be a dimensional decrease (or: "reduction"). The term "dimensional change" may especially refer to a change in volume of the ion-exchange resin, especially the ion-exchange resin as a whole. The dimensional change may especially be expressed in terms of a fractional (or percentual) change in volume of the ion-exchange resin with respect to the volume of the ion-exchange resin prior to the dimensional change. As reference, especially an essentially fully (Ca and/or Mg) ion-exchangeable ion-exchange resin (or "fresh" ion-exchange resin) may be used.

In embodiments, the ion-exchange resin may be arranged such that over a threshold value of the dimensional change the dimensional change of the ion-exchange resin mechanically adjusts the current through the current path. Hence, at a (predetermined) change in size of the ion-exchange resin, such as at a predetermined dimensional increase, the dimensional change (directly or indirectly) results in a (mechanical) adjustment of the current through the current path. For example, the dimensional change, such as a dimensional increase, may result in a blocking of a liquid current path, thereby reducing the liquid current (flow) through the liquid current path. Similarly, the dimensional change, such as a dimensional reduction, may result in an engagement (or disengagement) of two conductive elements, thereby adjusting the electrical current in an electrical current path.

The dimensional change may especially be based on expanding or shrinking of the ion-exchange resin (material) during ion exchanging. This may lead to a compression or decompression of a volume of the ion-exchange resin (material). For instance, particles of ion-exchange resin (material) may expand or may shrink. This may (thus) also lead to a macroscopically increase or decrease of the volume of the ion-exchange resin material. In the case of an expansion of particles of ion-exchange resin (material) the macroscopic expansion may in embodiments be limited by the volume in which the ion-exchange resin is arranged. Hence, upon ion-exchanging pressure may be built up.

In further embodiments, the dimensional change of the ion-exchange resin may directly mechanically adjust the current through the current path, such as by the ion-exchange resin physically blocking a liquid current through the ion-exchange resin, or in a (flexible) pipe adjacent to the ion-exchange resin.

In further embodiments, the dimensional change of the ion-exchange resin may indirectly mechanically adjust the current through the current path, such as by the dimensional increase (or: decrease) pushing an element towards or pulling an element from the current path (also see further below).

The ion-exchange resin may be arranged such that the current adjustment occurs when the dimensional change exceeds a (predefined) threshold value. The threshold value may especially correspond to a predefined depletion percentage of the ion-exchange resin. From the threshold value onwards, the current adjustment may be instant or gradual, especially instant, or especially gradual. For example, in embodiments, the device may be configured such that upon a depletion ≥ 90%, such as ≥95%, especially ≥98% of the ion-exchange resin the current is instantly adjusted. However, in further embodiments, the device may be configured such that, for example, the current is gradually adjusted in the range of 50-100%, such as in the range of 70-95%.

The term "gradually adjusted" may herein refer to a linear function but also to, for example, a logistic function. In embodiments, the current change may be monotonically increasing or decreasing with the dimensional change. For example, for a monotonically increasing current with a dimensional increase, the current overall increases along with the dimensional increase, but may locally (over a region of the dimensional increase) increase or remain the same while the dimensional increase continues.

In embodiments, the current adjustment may be irreversible, *i.e.,* the dimensional change of the ion-exchange resin (directly or indirectly) invokes an irreversible (mechanical) adjustment of the current through the current path. Such embodiment may especially be beneficial when combined with an instant adjustment of the current, especially in an embodiment wherein the current adjustment is to block (or: prevent) further use of the filter.

The dimensional change (swelling/contracting) of the ion-exchange resin may in principle be a reversible process in view of regeneration of the resin. The two extremes in the ion-exchange resin may be that it is either fresh (also: unloaded) or exhausted (also: fully loaded or depleted). The resin reaching either state, as well as any intermediate state, can invoke an action like e.g. stopping the current (flow) via the system of the invention.

Hence, in embodiments the ion-exchanging may comprise depleting or regenerating of the filter, especially of the ion-exchange resin. In further embodiments, the ion-exchanging may comprise depleting of the filter, especially of the ion-exchange resin. In further embodiments, the ion-exchanging may comprises regenerating of the filter, especially of the ion-exchange resin.

In further embodiments, the system, especially the filter, may be configured for alternating depletion and regeneration of the filter, especially of the ion-exchange resin. In such embodiments, the threshold value may comprise a depletion threshold value and a regeneration threshold value, wherein the depletion threshold value and the regeneration threshold value are different. Hence, the system, especially the filter, more especially the ion-exchange resin, may display hysteresis in terms of the current through the current path as a function of the depletion status of the filter, especially of the ion-exchange resin. Especially, herein the term ion-exchange, and similar terms, are used for the loading of the ion-exchange resin with Ca²⁺ and/or Mg²⁺.

In specific embodiments, the ion-exchange resin may undergo a dimensional change when depleting, wherein the ion-exchange resin is arranged such that over a depletion threshold value of the dimensional change the dimensional change of the ion-exchange resin mechanically adjusts the current through the current path.

In further specific embodiments, the ion-exchange resin may undergo a (reversed) dimensional change when regenerating, wherein the ion-exchange resin is arranged such that over a regeneration threshold value of the dimensional change the dimensional change of the ion-exchange resin mechanically adjusts the current through the current path. This may especially be the case when the adjustment is reversible. This may for instance be the case when a liquid current is hampered by blocking an in- or outlet of the filter via a movable or deformable element. In such embodiments, the movable or deformable element may be returned to its initial position or shape, whereby the liquid current can flow again. This may for instance also be the case when an electrical current is hampered by opening or closing an electrical switch. In such embodiments, the switch may be closed or opened again, whereby the electrical current can flow again.

As will be understood by the person skilled in the art, the term "over a threshold value" herein refers to a state past the threshold value, not necessarily a value higher than the threshold value.

Hence, in specific embodiments, the device may comprise (i) a filter having an autonomous mechanical end-of-life mechanism, (ii) a current path for an electrical or liquid current, wherein: the filter comprises an ion-exchange resin, wherein the ion-exchange resin undergoes a dimensional change when ion-exchanging; and the ion-exchange resin is arranged such that over a threshold value of the dimensional change the dimensional change of the ion-exchange resin mechanically adjusts the current through the current path.

In embodiments, the threshold value may be reached at a dimensional change corresponding to a predetermined depletion percentage of the ion-exchange resin, *i.e.* the threshold value may be selected to correspond to a predetermined depletion percentage of the ion-exchange resin. In embodiments, the predetermined depletion percentage may especially be at least 50%, especially at least 70%, such as at least 80%, especially at least 90%, such as at least 95%, especially at least 98%, including 100%. In general, it may be beneficial to select the threshold value such that the current is essentially only substantially adjusted when the filter nears end-of-life. Further, there may be some tolerance with respect to the maximal depletion of the ion-exchange resin. For example, a near-depleted ion-exchange resin may perform at a lower level than a new ion-exchange resin. Hence, in embodiments, the predetermined depletion percentage may be at most 100%, such as at most 98%, especially at most 95%, such as at most 90%, especially at most 80%. For instance, the predetermined depletion percentage may be selected from the range of 70-95%.

In embodiments wherein the current change is gradual, the threshold value may be reached for a relatively low depletion percentage, particularly in embodiments following a non-linear current adjustment, wherein the current adjustment accelerates towards a higher depletion percentage, such as for a logistic function. In contrast, in embodiments wherein the current adjustment is instant, the threshold value may beneficially be reached for a relatively high depletion percentage.

The device may comprise a moveable element, arranged to move as a function of the dimensional change. In particular, in embodiments, the device may comprise a moveable severing element, wherein the severing element is functionally coupled with the ion-exchange resin and arranged such that (a) from a predetermined dimensional change the severing element moves due to the dimensional change, and (b) over the threshold value of the dimensional change the severing element severs the electrical current path.

The device may thus have an electrical current through the electrical current path while the dimensional change is below the threshold value, whereas the electrical current path may be severed by the severing element once the dimensional change is at or above the threshold value, especially wherein the electrical current path is completely severed such that there is no longer electrical current through the electrical current path. In such embodiments, the device may especially be configured to block use of the device, especially the filter, once the current path is severed.

In further embodiments, the device may comprise a communication chip, e.g. a wireless communication chip such as a radio-frequency identification tag, wherein the communication chip comprises the electrical current path. In further embodiments, the filter may comprise the communication chip. The chip may be configured to provide a signal to the device or to an apparatus functionally coupled with the device, wherein the signal may relate to a depletion level of the filter. For example, the device or the apparatus may be configured to block use of the filter depending on the signal, or especially depending on the absence of the signal.

In yet further embodiments, the severing element may be configured to sever the electrical current path in the communication chip, especially thereby adjusting the communication (capabilities) of the communication chip, especially preventing the communication chip from providing a signal to the device or to an apparatus functionally coupled with the device.

In further embodiments, the dimensional change may comprise a dimensional reduction, and the severing element may comprise a spring.

In further embodiments, the device may comprise a moveable or deformable severing element, wherein the severing element comprises a spring. The spring may be arranged to have its spring force extend substantially parallel to the direction of the dimensional change, or substantially perpendicular thereto. The ion-exchange resin may comprise a resin selected from the group comprising resins that undergo a dimensional exchange while ion-exchanging.

The ion-exchange resin may comprise a cation-exchange resin, especially a strongly acidic cation-exchange resin, such as a polystyrene sulfonate resin, especially a polystyrene sulfonate resin with 4-20% cross-linkage, such as especially one or more of 4% cross-linked polystyrene sulfonate resin, 8% cross-linked polystyrene sulfonate resin, 12% cross-linked polystyrene sulfonate resin, 16% cross-linked polystyrene sulfonate resin, and 20% cross-linked polystyrene sulfonate resin, or especially a weakly acidic cation-exchange resin, such as C107E.

In embodiments, the ion-exchange resin may comprise an anion-exchange resin, especially a strongly basic anion-exchange resin, such as a polystyrene-based resin selected from the group comprising trimethyl ammonium, dimethyl hydroxyethyl ammonium, and an acrylic-based resin, or especially a weakly basic anion-exchange resin.

In embodiments, the ion-exchange resin may comprise a strongly acidic cation-exchange resin or a strongly basic anion-exchange resin. In further embodiments, the ion-exchange resin may comprise a weakly acidic cation-exchange resin or a weakly acidic basic anion-exchange resin.

It may be preferable to use an ion-exchange resin that undergoes a substantial dimensional change, as this may provide a higher resolution with respect to the threshold value and the current change. Hence, the ion-exchange resin, especially the first resin (see below), may especially be selected to undergo at least a 3% dimensional change due to exchanging (all of) the first ion type for the second ion type, such as at least a 5% dimensional change, especially at least a 10% dimensional change, such as at least a 20% dimensional change, especially at least a 50% dimensional change.

Further, particularly when using a resin that undergoes a dimensional increase while ion-exchanging, it may also be preferable to use an ion-exchange resin that does not undergo an excessive dimensional exchange, as this may, for example, limit the amount of resin that can initially be provided in the filter. Hence, the resin may especially be selected to undergo at most a 100% dimensional change due to exchanging (all of) the first ion type for the second ion type, such as at most an 80% dimensional change, especially at most a 50% dimensional change, such as at most a 25% dimensional change.

In further embodiments, the ion-exchange resin may comprise a plurality of resin types. For example, the ion-exchange resin may comprise a first resin and a second resin, wherein the first resin undergoes a larger dimensional change while ion-exchanging than the second resin. For example, the first resin may undergo a relative dimensional change dcᵣ₁ when ion-exchanging and the second resin may undergo a relative dimensional change dcᵣ₂ when ion-exchanging, wherein dci ≥ 2dc₂, such as ≥3dc₂, especially ≥ 5dc₂. Such embodiment may be especially beneficial when the second resin provides a separate benefit. For example, in embodiments, the second resin may have a higher affinity than the first resin for the second ion. In further embodiments, the second resin may have a higher capacity for ion-exchanging (for the second ion) than the first resin. In further embodiments, the second resin may be cheaper than the first resin.

The term "relative dimensional change" may especially refer to the dimensional change of the ion-exchange resin expressed as a fraction of the volume of the ion-exchange resin prior to the dimensional change.

In embodiment, the ion exchange may comprise polyacrylic and/or polystyrene that is e.g. cross-linked with divinylbenzene. In specific embodiments the ion-exchange resin may comprise a resin selected from the group comprising a macroporous polyacrylic crosslinked with divinylbenzene and a gel of polystyrene crosslinked with divinylbenzene. In further embodiments, the ion-exchange resin may comprise a resin selected from the group comprising C107E and CT122 from Purolite.

The person skilled in the art will be capable of selecting a suitable ion-exchange resin, especially a first resin, for the intended application, wherein the ion-exchange resin is suitable for exchanging a (specific) first ion type for a (specific) second ion type, and wherein the ion-exchange resin undergoes a suitable dimensional change while ion-exchanging. Similarly, in embodiments wherein the ion-exchange resin comprises a second resin, the person skilled in the art may select a second resin corresponding to other desired features of the ion-exchange resin. The person skilled in the art may, for example, consult handbooks such as Perry's Chemical Engineers' Handbook, 2008, The McGraw-Hill Companies, particularly chapter 16, or a product guide such as the Purolite Product Guide, 2015, which are hereby herein incorporated by reference, to select resins having desirable properties, such as a desirable dimensional change, especially dimensional increase (also "swelling due to exchange").

The current path may be arranged in the filter, or may be arranged external to the filter, especially adjacent to the filter. In embodiments, the current path may be for liquid current and may be arranged in the filter. The ion-exchange resin may be arranged in or adjacent to the liquid current path, and the dimensional change of the ion-exchange resin may block the liquid current path. Especially, the dimensional change may comprise a dimensional increase. In further embodiments, the ion-exchange resin may be arranged in the liquid current path, wherein the dimensional change of the ion-exchange resin directly blocks the liquid current, particularly as the expansion of the resin may result in the resin particles being pushed together, thereby preventing liquid to flow there through. In further embodiments, the ion-exchange resin may be arranged adjacent to the liquid current path. The liquid current path may for instance run through a flexible tube, wherein the dimensional change of the ion-exchange resin results in a force on the flexible tube, thereby closing the liquid current path.

In further embodiments, the ion-exchange resin may be arranged such that over a threshold value of the dimensional change the dimensional change of the ion-exchange resin mechanically adjusts the current through the current path at a first position, wherein the first position is within the filter.
In further embodiments, the liquid current path may be arranged external to the filter. A moveable or deformable blocking element may be arranged such that the blocking element moves due to the dimensional change of the ion-exchange resin, to block or open the liquid current path.

In further embodiments, the ion-exchange resin may be arranged such that over a threshold value, the dimensional change of the ion-exchange resin mechanically adjusts the current through the current path at a second position, wherein the second position is within the device but external of the filter.

In specific embodiments, the device may comprise (i) a filter that has or is associated to an autonomous mechanical end-of-life mechanism, (ii) an electrical current path for an electrical current, and (iii) a moveable severing element, wherein: the filter comprises an ion-exchange resin, wherein the ion-exchange resin undergoes a dimensional change when ion-exchanging; wherein the severing element is functionally coupled with the ion-exchange resin and arranged such that (a) from a predetermined dimensional change the severing element moves due to the dimensional change, and (b) over the threshold value of the dimensional change the severing element severs the electrical current path, especially thereby adjusting the electric current.

In specific embodiments, the device may comprise (i) a filter that has or is associated to an autonomous mechanical end-of-life mechanism, (ii) a liquid current path for a liquid current, wherein: the filter comprises the liquid current path and an ion-exchange resin, wherein the ion-exchange resin is arranged in or adjacent to the filter current path, especially in the filter current path, and wherein the ion-exchange resin undergoes a dimensional change when ion-exchanging; and the ion-exchange resin is arranged such that over a threshold value of the dimensional change the dimensional change of the ion-exchange resin blocks the liquid current path.

In specific embodiments, the device may be part of or may be applied in a domestic appliance or a personal health appliance that processes water in one way or another. For example, the device may be part of or may be applied in a water purification apparatus, a coffee machine, a washing machine, a laundry machine, a boiler, a decalcification system, a humidifier, a steam iron, a rice cooker, a respiratory support unit, or the like.

Thus, the invention may provide an apparatus functionally couplable with the device according to the invention, especially functionally couplable with the filter according to the invention. The apparatus may especially be configured for water processing. In embodiments, the apparatus may comprise an apparatus selected from the group comprising a domestic appliance and a personal health appliance.

The invention may further provide a method for hampering, especially preventing, usage of a filter upon approaching depletion of ion-exchange resin. In embodiments, the filter may comprise the ion-exchange resin, especially wherein the ion-exchange resin undergoes a dimensional change when ion-exchanging. The ion-exchange resin may be arranged such that the dimensional change of the ion-exchange resin mechanically adjusts a current through a current path, *i.e.,* the dimensional change may, preferably when reaching or exceeding a certain threshold value, physically adjust a current through a current path. In particular, the dimensional change, corresponding to an expansion or reduction of the ion-exchange resin, may correspond to a force in the direction of the current path. In embodiments, the current path may be arranged in the filter or in a device or apparatus, especially a device, or especially an apparatus, functionally coupled to the filter. The method may especially comprise (irreversibly) hampering usage of the filter upon, especially after, current adjustment, *i.e.* the current adjustment may result in (irreversibly) hampering, especially preventing, the usage of the filter

Hence, once the dimensional change of the ion-exchange resin caused by ion-exchanging crosses a threshold value, the current through a current path may be adjusted, whereupon the method comprises (irreversibly) hampering, especially preventing, usage of the filter.

In embodiments, the current path may comprise a liquid current path for a liquid current, especially a liquid current path through the filter, especially wherein the method comprises blocking the liquid current path.

In embodiments, the current path may comprise an electrical current path for an electrical current, especially wherein the method comprises severing the electrical current path.

In a further aspect, the invention may provide a kit of parts comprising the filter according to the invention and the apparatus according to the invention.

In embodiments, the apparatus may comprise the device according to the invention, wherein the device, when comprising the filter, has the autonomous mechanical end-of-life mechanism of the invention, which may especially be arranged in or provided by the filter.

The invention is herein, for explanatory purposes, primarily described with regards to a filter for preventing calcification of a device, more especially wherein the device is a coffee machine. However, it will be clear to the person skilled in the art that the invention may be applied to other types of filters and devices without deviating from the scope of the invention set out herein.

The embodiments described herein are not limited to a single aspect of the invention. For example, a feature of an embodiment related to the first aspect of the invention may further apply to the second aspect of the invention.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1A-E schematically depict embodiments of the device and the method according to the invention; and
Fig. 2 schematically depicts an embodiment of the kit of parts according to the invention.

The schematic drawings are not necessarily on scale.

### DETAILED DESCRIPTION OF THE EMBODIMENTS

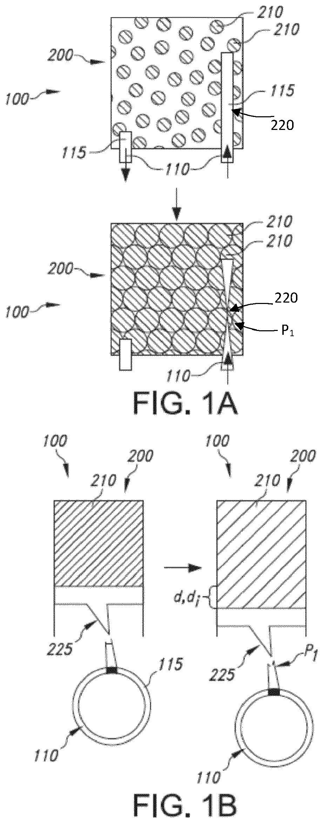

Fig. 1A-E schematically depict embodiments of the device 100 and the method according to the invention. In the depicted embodiments, the device 100 comprises a filter 200, a current path 110 for an electrical or liquid current 115, and an end-of-life mechanism, especially a mechanical end-of-life mechanism, arranged to adjust the current through the current path and hamper further usage of the filter. The filter 200 comprises an ion-exchange resin 210 that undergoes a dimensional change d (increase dᵢ or reduction dᵣ) when ion-exchanging. The ion-exchange resin 210 is arranged such relative to the current path 110 that the dimensional change d of the ion-exchange resin 210 mechanically adjusts the current 115 through said current path 110, e.g. by physically obstructing the path or causing the path to become obstructed or severed.

Similarly, the depicted embodiments schematically depict a method for hampering usage of a filter 200 when the latter approaches depletion. The filter comprises an ion-exchange resin 210, wherein the ion-exchange resin 210 undergoes a dimensional change d (increase dᵢ or reduction dᵣ) when ion-exchanging, and wherein this dimensional change mechanically adjusts a current 115 through a current path 110, e.g. by physically obstructing the path or causing the path to become obstructed or severed.

The adjustment of the current 115 results in the usage of the filter 200 being hampered. The mechanical end-of-life mechanism thus is an autonomous end-of-life mechanism that may automatically block further usage of the filter when the latter is completely or nearly depleted, without interaction of a user or some other control component being needed.

In the depicted embodiments of the device and method, the current path 110 may be arranged in the filter 200 or outside the filter 200. The current 115 may be a liquid current or an electrical current. The dimensional change d of the ion-exchange resin may be an increase dᵢ or a reduction dᵣ. The dimensional change may act on the current path directly to obstruct, block or severe the path, or via an intermediate adjustment element such as a blocking element 220 or a severing element 225, with or without spring 226. Preferably, adjustment of the current 115 through the current path 110 starts when the dimensional change d of the ion-exchange resin 210 reaches or exceeds a certain threshold value.

Specifically, Fig. 1A schematically depicts an embodiment of a device 100, comprising a filter 200, a current path 110 and an autonomous, mechanical end-of-life mechanism. The current path 110, in this example, is intended for a liquid current 115, e.g. water. In particular, as indicated by the arrows, the current path 110 includes an inlet portion for supplying liquid current into the filter and an outlet portion for allowing liquid current to exit the filter. The current path 110 may for instance be formed by a tube.

The filter 200 comprises ion-exchange resin 210, which comprises particles that initially may be relatively sparsely distributed in the filter 200. As the filter 200 exchanges ions with the liquid current 115, e.g. with water that in use passes there through, the filter 200 undergoes a dimensional change d, in the depicted embodiment a dimensional increase dᵢ. In the depicted embodiment, the particles of the ion-exchange resin 210 increase in size, eventually pressing against one another and providing a pressure to their environment.

The end-of-life mechanism comprises a blocking element 220 that is movably and/or deformably arranged and functionally coupled to the ion-exchange resin, so as to be moved and/or deformed by the dimensional change of the ion-exchange resin, or the accompanying pressure change. In the depicted embodiment, the blocking element 220 is formed by a flexible portion in the tube that forms the current path 110. In use, when the ion-exchange material expands, the blocking element 220 will deform, more particularly collapse so as to obstruct the current path 110, thus blocking the liquid current 115 through said path 110, causing further usage of the filter 200 to be hampered. In the depicted embodiment, the blocking element 220 is arranged in an inlet portion of the current path 110. In alternative embodiments, it may be arranged in an outlet portion or in both the inlet and the outlet portion of the current path 110.

Preferably, the structural design (e.g. wall thickness, cross sectional dimensions) and/or material properties (e.g. E-modulus, shore hardness) of the blocking element 220 are chosen such that deformation/collapsing only occurs when the dimensional change d of the ion-exchange resin 210 reaches or exceeds a certain threshold value. Preferably, this threshold value is reached when the ion-exchange resin reaches a certain depletion percentage, e.g. more than 70%, preferably more than 80%, more preferably more than 90% and most preferably more than 95%. Accordingly, the filter will work normal, until the filter reaches a certain depletion level. Then, the dimensional change will be large enough to cause the blocking element to move or deform so as to block the current path 110.

In further embodiments (not shown), the liquid current path 110 may be arranged external to the filter 200. The blocking element 220 may be moveably and/or deformably arranged in the vicinity of the current path, to be moved and/or deformed by the dimensional change of the ion-exchange resin, so as to cause the liquid current path to become blocked and further use of the filter to be hampered. Use of the filter may further be hampered by having the blocking element 220 open an alternative route for the liquid current 115, especially an alternative route with reduced resistance (as compared to the current path 110)

In the embodiment of Fig. 1A, the ion-exchange resin 210 particles increase in size due to ion-exchanging. Thereby, the ion-exchange resin particles collectively take up a larger volume within the confines of the space in which they are arranged (here represented by the black box surrounding the particles. Hence, in this embodiment, the dimensional change of the ion-exchange resin 210 may essentially be on a microscopic level.

Fig. 1B schematically depicts an embodiment of a device 100, comprising a filter 200, a current path 110, and an autonomous, mechanical end-of life mechanism. The current path 110, in this example, is intended for an electrical current 115. The current path may for instance be formed by a coil, as depicted.

The end-of-life mechanism comprises a severing element 225 that is movably and/or deformably arranged and is functionally coupled to the ion-exchange resin 210 so as to be moved and/or deformed thereby, when the ion-exchange resin undergoes a certain dimensional change. In the depicted embodiment, the severing element 225 is arranged to be moved by the ion-exchange resin, as a function of the dimensional change d of the ion-exchange resin 210. The movement of the severing element 225 causes the electrical current path 110, i.e. shortened coil 110, to be severed so that the coil is no longer shorted, thereby (irreversibly) adjusting the current 115 through the current path 110.

Preferably, the severing element 225 is arranged relative to the current path 110 in such way that severing only occurs when the dimensional change d of the ion-exchange resin 210 exceeds a certain threshold value. Preferably, this threshold value is reached when the ion-exchange resin reaches a certain depletion percentage, e.g. more than 70%, preferably more than 80%, more preferably more than 90% and most preferably more than 95%. Accordingly, the filter will work normal, until the filter reaches a certain depletion level. Then, the dimensional change will be large enough to cause the severing element 225 to severe the electrical current path 110.

In the embodiment of Fig. 1B, the ion-exchange resin 210 increases in size due to ion-exchanging. Thereby, the ion-exchange resin particles collectively take up a larger volume on a macroscopic level (here represented by their encompassing black box growing in size). Hence, in this embodiment, the dimensional change of the ion-exchange resin 210 may essentially be on a macroscopic level (and on the microscopic level).

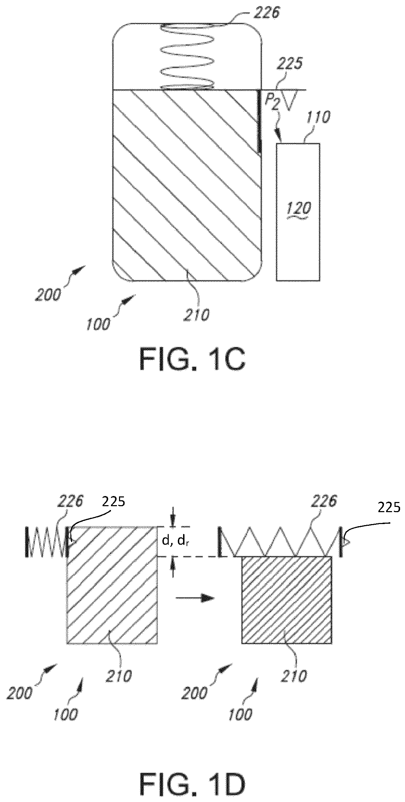

In the embodiments of Fig. 1A and 1B, the ion-exchange resin 210 and the blocking element 220, respectively the severing element 220 are arranged such that mechanical adjustment of the current 115 through the current path 110 occurs at a first position Pi within the filter 200. In alternative embodiments, adjustment of the current 115 through the current path 110 may occur at a second position P₂ outside the filter 200 (but within the device 100), as for instance illustrated in Fig. 1C and 1D.

Fig. 1C schematically depicts an embodiment of a device 100, comprising a filter 200, a current path 110 for electrical current 115 and a severing element 225, that is functionally coupled to the ion-exchange resin 210 by means of a spring 226, so as to be moved and/or deformed when the ion-exchange resin undergoes a certain dimensional change. Here, however, the ion-exchange resin 210 undergoes a dimensional reduction when ion-exchanging. The spring 226 helps to bias the severing element 225 into contact with the ion-exchange resin 210. The severing element 225 is arranged to sever a current path 110 when the dimensional reduction of the ion-exchange resin 210 exceeds a certain threshold value, thereby adjusting the electrical current 115 through the current path 110. In this embodiment, the current path 110 is arranged outside the filter 200, in a communication chip 120 of the device 100. The communication chip 120 may for instance be a wireless communication chip, such as a radio-frequency identification (RFID) chip. The severing element 225, upon severing the electrical current path 110, may damage, especially destroy, the communication chip 120, thereby adjusting its communication signal. That is, after the severing of the electrical current path 110 the communication chip 120 may provide a different communication signal or no communication signal to the device 100.

In the embodiment of Fig. 1C, the biasing force exerted by the spring 226 acts in the same or substantially the same direction as the dimensional change of the ion-exchange resin 210. In other embodiments, the biasing force may act in a direction different from the dimensional change direction of the ion-exchange resin. An example is shown in Fig. 1D.

Fig. 1D schematically depicts an embodiment of a device 100, comprising a filter 200, a current path (not shown), a moveable severing element 225 and a spring 226 that biases the severing element 225 into contact with the ion-exchange resin 210. In this embodiment, the severing element 225 and spring 226 are arranged to move in a direction perpendicular to the dimensional change direction of the ion-exchange resin. More particularly, the severing element is arranged to be moved by the spring 226, but is blocked from moving by the ion-exchange resin. When the dimensional reduction dᵣ of the ion-exchange resin exceeds a threshold value, the spring 226 may sprung, *i.e.*, transition from a compressed state into a released state (as depicted), thereby urging the severing element 225 past the ion-exchange resin 210 and towards the current path 110 so as to sever the path and adjust a current 115 there through. In the depicted embodiment, the spring 226 and severing element 225 are arranged to move in a direction perpendicular to the direction of the dimensional change of the ion-exchange resin. Such embodiment may be beneficial if a more discrete (rather than continuous) response to the dimensional change is desired, or if it is desirable that the spring provides a larger force when extending. The configuration may also contribute to a more compact design.

Hence, according to some embodiments, the device 100 comprises a moveable severing element 225 and a spring 226, arranged to bias the severing element 225 towards the current path 110 that is to be severed. The spring 226 is arranged such that it extends (from a compressed condition) when a dimensional change d, especially a dimensional reduction dᵣ of the ion-exchange resin 210 passes a threshold value. The biasing force of the spring 226 may extend essentially parallel to, or essentially perpendicular to the direction of the dimensional change d of the ion-exchange resin 210. The extending of the spring 226 causes the severing element 225 to (irreversibly) adjust the current 115 through the current path 110.

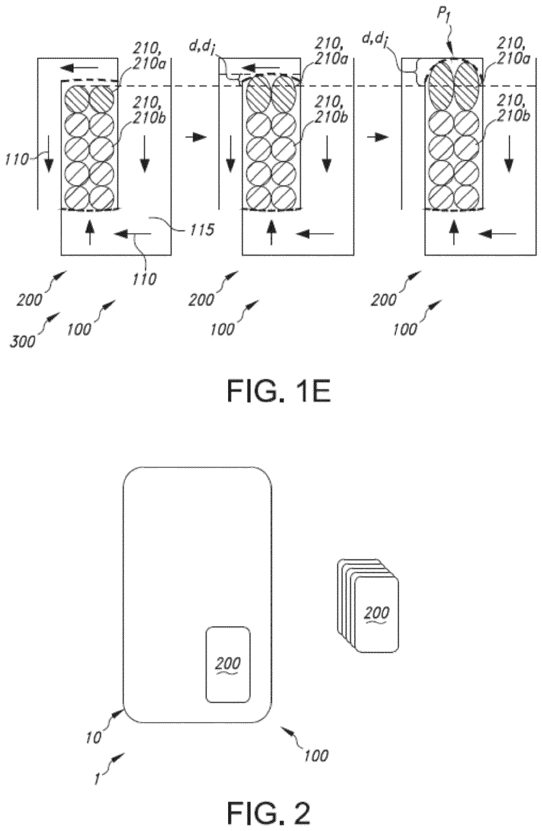

Fig. 1E schematically depicts an embodiment of a device 100, comprising a filter 200 and a current path 110 for a fluid current 115, wherein the current path 110 is located in the filter 200. The ion-exchange resin 210 is arranged in or adjacent to the filter current path, and there is no separate blocking element 220 (as shown in Fig. 1A) or severing element 225 (as shown in Fig. 1B-D). Instead, the ion-exchange resin 210 itself is arranged to obstruct the current path 110, due to a dimensional change d, especially a dimensional increase dᵢ, of the ion-exchange resin 210.

In the depicted embodiment, the ion-exchange resin 210 comprises a first resin 210ₐ and a second resin 210_{b}, wherein the first resin 210ₐ and the second resin 210_{b} comprise different resins. Especially, the first resin may undergo a larger dimensional change than the second resin when ion-exchanging. In further embodiments, the second resin may have a better ion-exchange performance than the first resin, especially with respect to ion-exchanging. In further embodiments, the second resin may have a higher affinity, especially with respect to the second ion type. In further embodiments, the second resin may have a higher capacity for ion-exchanging, especially for the second ion type. Hence, by combining different resin types, different beneficial aspects of the second resin (affinity, capacity, costs) may be combined with the (more) substantial dimensional change undergone by the first resin.

In further embodiments, the first resin may be arranged downstream from the second resin, especially with respect to a flow direction of liquid current 115 through the ion-exchange resin. Such embodiment may be beneficial because the exposure of the first resin to the second ion type will depend on the depletion state of the second resin, which may delay the dimensional change of the first resin until the second resin has reached a certain threshold, especially a certain depletion or regeneration threshold.

Hence, in embodiments, the ion-exchange resin 210 may comprise a first resin 210ₐ and a second resin 210_{b}, wherein the first resin 210ₐ undergoes a larger dimensional change when ion-exchanging than the second resin 210_{b}, and wherein the second resin has a better performance than the first resin (with respect to ion-exchanging). In further embodiments, the first resin 210ₐ may be arranged downstream of the second resin 210_{b} with respect to a liquid flow direction through the filter.

Fig. 2 schematically depicts a kit of parts 1 comprising a device 100, comprising a filter 200, according to the invention and an apparatus 10 according to the invention. In the depicted embodiment, for visualization purposes only, a single filter 200 is arranged in the apparatus 10 and several filters are arranged external from the apparatus. In further embodiments, the kit of parts 1 may comprise a single apparatus 10 and a single filter 200, wherein the filter 200 is arranged either internal or external of the apparatus 10.

The apparatus 10 may be selected from the group comprising a coffee machine, a water purification machine, a washing machine, a laundry machine, a boiler, a decalcification system, a humidifier, a steam iron, a rice cooker, and a respiratory support unit.

The term "essentially" herein will be understood by the person skilled in the art. The term "essentially" may include embodiments with "entirely", "completely", "all", etc. In such case, the adjective essentially may be removed. Where applicable, the term "essentially" may also relate to 90% or higher, such as 95% or higher, especially 99% or higher, even more especially 99.5% or higher, including 100%.

The term "further embodiment" and similar terms may refer to an embodiment comprising the features of the previously discussed embodiment, but may also refer to an alternative embodiment.

It should be noted that the above-mentioned embodiments illustrate rather than limit the invention, and that those skilled in the art will be able to design many alternative embodiments without departing from the scope of the appended claims. The mere fact that certain measures are recited in mutually different dependent claims does not indicate that a combination of these measures cannot be used to advantage. The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A device (100) comprising a filter (200), a current path (110) for an electrical or liquid current (115), and an end-of-life mechanism for hampering usage of the filter (200) upon approaching depletion thereof, wherein:
- the filter (200) comprises an ion-exchange resin (210), wherein the ion-exchange resin (210) undergoes a dimensional change (d) when ion-exchanging; and
- the ion-exchange resin (210) is arranged such that the dimensional change (d) of the ion-exchange resin (210) mechanically adjusts the current (115) through the current path (110).

2. The device (100) according to claim 1, wherein adjustment of the current through the current path occurs once the dimensional change (d) of the ion-exchange resin (210) reaches or exceeds a threshold value.

3. The device (100) according to claim 2, wherein the threshold value is reached at a dimensional change (d) corresponding to a predetermined depletion percentage of the ion-exchange resin (210), wherein the depletion percentage is selected from the range of 70% - 100%.

4. The device (100) according to any one of the preceding claims wherein the end-of-life mechanism comprises an adjustment element (220, 225, 226), moveably and/or deformably arranged near the current path (110), and functionally coupled to the ion-exchange resin (210) to be moved and/or deformed by the dimensional change (d) of the ion-exchange resin, to obstruct, block or severe the current path.

5. The device (100) according to claim 4, wherein the current path (110) comprises an electrical current path for electrical current (115), and wherein the adjustment element comprises a severing element (225) to sever the electrical current path (110), in particular when the dimensional change (d) of the ion-exchange resin eaches or exceeds a threshold value.

6. The device (100) according to claim 5, further comprising a communication chip (120), wherein the communication chip (120) comprises the electrical current path (110).

7. The device (100) according to any one of claims 4-6, wherein the ion-exchange resin (210) undergoes a dimensional reduction when ion-exchanging, and wherein the adjustment element (220, 225) comprises a spring (226).

8. The device (100) according to any one of the preceding claims, wherein the ion-exchange resin (210) comprises a first resin (210ₐ) and a second resin (210_{b}), wherein the first resin (210ₐ) undergoes a larger dimensional change when ion-exchanging than the second resin (210_{b}), and wherein the second resin (210_{b}) has a higher capacity for ion-exchanging than the first resin (210ₐ).

9. The device (100) according to claim 8, wherein the first resin (210ₐ) is arranged downstream of the second resin (210_{b}) with respect to a liquid flow direction through the filter.

10. The device (100) according to any one of the preceding claims, wherein the ion-exchange resin (210) is arranged to mechanically adjust the current (115) through the current path (110) at a first position (P₁), located within the filter (200) and/or a second position (P₂), located within the device (100) but external of the filter (200).

11. An apparatus (10) which comprises or is functionally couplable to the device (100) according to any one of the preceding claims, wherein the apparatus (10) is configured for water processing.

12. A method for hampering usage of a filter (200) upon approaching depletion of an ion-exchange resin (210), wherein the filter (200) comprises the ion-exchange resin (210), wherein the ion-exchange resin (210) undergoes a dimensional change (d) when ion-exchanging, and wherein the ion-exchange resin (210) is arranged such that the dimensional change (d) of the ion-exchange resin (210) mechanically, more particularly physically adjusts a current (115) through a current path (110), wherein the current path (110) is arranged in the filter (210) or in an apparatus (10) functionally coupled to the filter (200), and wherein the method comprises hampering usage of the filter (200) upon current adjustment.

13. The method according to claim 12, wherein the current path (100) comprises a liquid current path for a liquid current (115), and wherein the method comprises blocking the liquid current path.

14. The method according to any one of the preceding claims 12-13, wherein the current path (110) comprises an electrical current path for an electrical current (115), and wherein the method comprises severing the electrical current path.

15. A kit of parts (1) comprising a device (100) according to any of claims 1-10 and the apparatus (10) according to claim 11.
